# FASCICULE DE BREVET EUROPEEN

(11) **EP 1 851 689 B1**
(45) Date de publication et mention de la délivrance du brevet: **01.04.2009**
(21) Numéro de dépôt: 05825207.3
(22) Date de dépôt: 14.12.2005
(51) Int. Cl.: G06K 19/067, G01S 13/75

(54) **TRANSPONDEURS A ONDES ACOUSTIQUES DE SURFACE**
OBERFLÄCHENSCHALLWELLENTRANSPONDER
SURFACE ACOUSTIC WAVE TRANSPONDERS

(30) Priorité: 15.12.2004 FR 0413336
(43) Date de publication de la demande: 07.11.2007
(73) Titulaire: Senseor, 06560 Valbonne (FR)
(72) Inventeur: CHOMIKI, Michel, 06800 Cagnes Sur Mer (FR)
(74) Mandataire: Bréda, Jean-Marc
(86) Numéro de dépôt international: PCT/EP2005/056779
(87) Numéro de publication internationale: WO 2006/064019

(56) Documents cités:
- GB-A- 2 238 210
- HORINE B: "Narrowband SAW filters for IF applications" FORTY-FOURTH ANNUAL SYMPOSIUM ON FREQUENCY CONTROL, 23 mai 1990 (1990-05-23), pages 316-322, XP010001358

## Description

Le domaine de l'invention est celui des transpondeurs à ondes acoustiques de surface et des dispositifs associés. Cette invention s'applique plus particulièrement aux techniques d'identification et de localisation de transpondeurs. Elle s'applique également à la transmission d'informations ou de mesures, le transpondeur étant alors utilisé comme transducteur.

Ce type de transpondeurs peut, notamment, être utilisé sur véhicules, et en particulier sur véhicules routiers.

Un transpondeur connu est décrit par le document GB 2 238 210.

Les dispositifs à ondes acoustiques de surface encore appelés dispositifs « SAW », acronyme anglo-saxon signifiant Surface Acoustic Wave sont utilisés pour réaliser des systèmes d'interrogation à distance et s'apparentent à de petits systèmes radar.

Ils comprennent généralement :
- Un système d'interrogation comportant des moyens d'émission/réception d'ondes radiofréquence associés à une électronique de traitement de données et ;
- Au moins, un transpondeur SAW à ondes acoustiques de surface.

Le principe de fonctionnement est le suivant :
- le système d'interrogation envoie un signal d'interrogation vers le transpondeur SAW ;
- le transpondeur SAW capte le signal d'interrogation, le convole avec sa réponse impulsionnelle propre et réémet un écho ainsi traité vers le système d'interrogation ;
- le récepteur du système d'interrogation détecte, en dehors de la plage temporelle d'émission du signal d'interrogation, tout ou partie de l'écho du transpondeur SAW et extrait de la réponse reçue l'information codée par le transpondeur qui est ensuite traitée par l'électronique de traitement.

Deux grandes familles de transpondeurs SAW existent :
- les transpondeurs à ligne à retard ;
- les transpondeurs à résonateur.

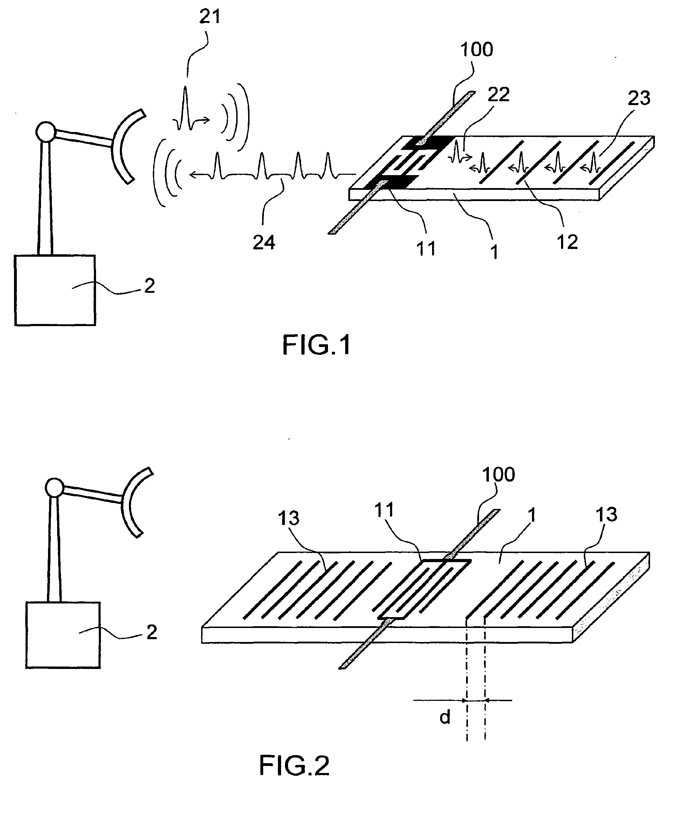

Un dispositif SAW comportant un transpondeur à ligne à retard comprend généralement, comme indiqué sur la figure 1:
- un système d'interrogation 2 ;
- au moins, un transpondeur 1 comportant :
   ○ une antenne 100 ;
   ○ un transducteur à peigne d'électrodes interdigitées 11 et une ligne à retard 12 connecté à l'antenne 100.

Le système d'interrogation 2 envoie une impulsion radiofréquence 21 de faible largeur temporelle. L'antenne 100 du transpondeur 1 capte le signal radiofréquence. Le transpondeur 1 comporte un transducteur 11 qui transforme le signal radiofréquence 21 en impulsion acoustique 22. Un ou plusieurs réflecteurs acoustiques 12 réfléchissent l'impulsion 22 en une pluralité d'échos 23. Le transducteur 11 transforme cette série d'échos acoustiques en une impulsion radiofréquence 24 réémise par l'antenne 100. Cette impulsion 24 est donc une succession de répliques du signal d'interrogation et constitue le code d'identification du transpondeur.

Ce système présente les inconvénients suivants :
- le signal d'interrogation 21 doit être de durée plus faible que le retard élémentaire τ inscrit sur le transpondeur SAW 1 afin de pouvoir dissocier temporellement les différents échos réémis 23. Cette condition détermine :
   ○ ou la bande passante minimale B du système. B doit être supérieure à 1/τ ;
   ○ ou le retard élémentaire τ à bande B donnée. τ doit être supérieur à 1/B. Dans un système à bande B étroite, le retard τ est, par conséquent, important et conduit à des dispositifs SAW de grande taille donc onéreux ;
- le système ne permet d'identifier simplement qu'un seul transpondeur à la fois. Pour différentier plusieurs transpondeurs, il faut :
   ○ coder la position des réflecteurs de façon à obtenir des retards τ variables d'un dispositif à l'autre ou ;
   ○ augmenter le nombre des réflecteurs, ce qui conduit soit à un allongement du transpondeur soit à une plus grande complexité du système de traitement afin d'extraire l'information pertinente.

Un dispositif SAW comportant un ou plusieurs transpondeur à résonateurs comprend généralement, comme indiqué sur la figure 2 :
- un système d'interrogation 2 ;
- au moins, un transpondeur 1 comportant :
   ○ une antenne 100 ;
   ○ un transducteur à peigne d'électrodes interdigitées 11 et une cavité résonnante SAW 13 caractérisée par sa fréquence centrale F et son facteur de qualité Q. La cavité 13 comprend deux séries de réflecteurs régulièrement espacés d'une distance d. Le transducteur est connecté à l'antenne 100.

L'interrogateur 2 envoie une impulsion radiofréquence longue pour charger le transpondeur 1. A l'arrêt de l'émission, le transpondeur se décharge sur sa fréquence de résonance propre avec une constante de temps τ égale à Q/πF. Cette décharge du transpondeur constitue l'écho en retour détecté par le récepteur de l'interrogateur. Une analyse spectrale permet ensuite de remonter à la fréquence du transpondeur qui constitue son identification. Cette analyse peut être effectuée par des algorithmes basés sur la transformation de Fourier, par exemple de type FFT, acronyme anglo-saxon signifiant Fast Fourier Transform.

Ce système présente les inconvénients suivants :
- le signal reçu étant le transitoire à la décharge du transpondeur, la sensibilité du système est alors faible ;
- le traitement par analyse spectrale est complexe.

D'autre part, ces systèmes ne permettent pas de localiser un transpondeur parmi d'autres avec un seul système d'interrogation. Par conséquent, à chaque transpondeur est associé un système d'interrogation. Ce principe est onéreux et peut se révéler complexe à mettre en oeuvre, soit pour des problèmes d'encombrement, soit pour des problèmes de gestion des signaux émis et reçus.

L'invention a pour objet un transpondeur électronique selon la revendication 1.

Le transpondeur et le système d'interrogation à distance associé selon l'invention permettent de résoudre ces différents inconvénients. Le transpondeur comprend un dispositif à ondes acoustiques de surface, comportant un filtre électronique à bande spectrale étroite centrée sur une fréquence centrale et une ligne à retard fonctionnant en réflexion. En disposant de filtres à bande étroites centrées sur des fréquences différentes, il est ainsi possible de discriminer facilement différents transpondeurs. Les lignes à retard permettent de décaler temporellement le signal émis du signal reçu. Le transpondeur selon l'invention peut également être utilisé comme transducteur. D'autre part, en utilisant un dispositif d'interrogation utilisant deux antennes de réception, il est possible de localiser la position de plusieurs transducteurs avec un seul dispositif d'interrogation.

Avantageusement, le transponder comporte plusieurs filtres électroniques à bande spectrale étroite, chaque bande spectrale de chaque filtre étant centrée sur une fréquence centrale différente, lesdits filtres électroniques étant associés en parallèle et la ligne à retard étant disposée en série avec l'association desdits filtres.

Avantageusement, le transpondeur comprend des moyens de transduction d'une grandeur physique en variation d'une ou de plusieurs des fréquences centrales ou des moyens de modulation du signal radiofréquence reçu, un des dits moyens de modulation peut être un interrupteur tout ou rien. Dans un mode particulier de réalisation, le transpondeur comporte au moins trois filtres, le premier destiné à la mesure de la pression et le second et le troisième destinés à la mesure de température.

L'invention a également pour objet un dispositif électronique d'interrogation à distance selon la revendication 7.

Avantageusement, le premier ensemble électronique de génération de signaux comprend au moins des moyens électroniques de synthèse de fréquence permettant de générer un signal à une fréquence d'émission variable située dans la bande spectrale du transpondeur et des moyens électroniques permettant d'émettre un signal radiofréquence modulé en amplitude, la modulation d'amplitude étant à une fréquence d'émission variable située dans la bande spectrale du transpondeur. La durée du signal d'émission peut être sensiblement supérieure au rapport du coefficient de surtension du filtre électronique du transpondeur sur sa fréquence centrale.

Avantageusement, le premier ensemble électronique de génération de signaux radiofréquences et le second ensemble électronique de traitement de signaux radiofréquences ont une antenne commune dite d'émission/réception et des moyens électroniques de commande permettant de guider le signal d'émission du premier ensemble électronique d'émission vers ladite antenne et de guider le signal de réception de ladite antenne vers le second ensemble électronique de réception. De plus, le second ensemble électronique de traitement de signaux radiofréquences peut comporter des moyens de démodulation d'amplitude, des moyens d'échantillonnage et des moyens de traitement électroniques permettant au moins de déterminer l'amplitude et la fréquence des signaux reçus. Le second ensemble électronique de traitement de signaux radiofréquences peut comporter également au moins un convertisseur analogique/numérique permettant d'assurer le traitement numérique du signal.

Avantageusement, lorsqu'un signal est émis par le premier ensemble électronique, l'échantillonnage des signaux reçus débute à un instant compris entre la fin de l'émission du signal émis et la fin de l'émission dudit signal émis augmentée du retard temporel de la ligne à retard du transpondeur.

Avantageusement, le second ensemble électronique de traitement de signaux radiofréquences comprend une seconde antenne de réception distante de la première antenne et des moyens de comparaison électronique des phases des signaux radiofréquence reçus par la première et la seconde antenne. La distance séparant la première antenne de la seconde antenne est inférieure ou égale à la moitié de la longueur d'onde correspondant à la fréquence centrale du transpondeur.

Avantageusement, le procédé de mise en place d'un dispositif électronique d'interrogation à distance comporte les charactéristiques de la revendication 17.

Avantageusement, le dispositif d'interrogation à distance émet et reçoit des signaux radiofréquences dans la bande ISM à 433 mégaHertz.

Le dispositif est avantageusement monté sur un véhicule et en particulier un véhicule routier.

L'invention sera mieux comprise et d'autres avantages apparaîtront à la lecture de la description qui va suivre donnée à titre non limitatif et grâce aux figures annexées parmi lesquelles :
- La figure 1 représente le principe d'un premier dispositif d'interrogation à SAW selon l'art antérieur ;
- La figure 2 représente le principe d'un second dispositif d'interrogation à SAW selon l'art antérieur ;
- La figure 3 représente un transpondeur selon l'invention ;
- La figure 4 représente une variante d'un transpondeur selon l'invention ;
- La figure 5 représente un dispositif d'interrogation à distance selon l'invention ;
- Les figures 6, 7 et 8 représentent le principe de la localisation d'une pluralité de transpondeurs selon l'invention ;
- La figure 9 représente un second dispositif d'interrogation à distance comportant deux antennes selon l'invention.

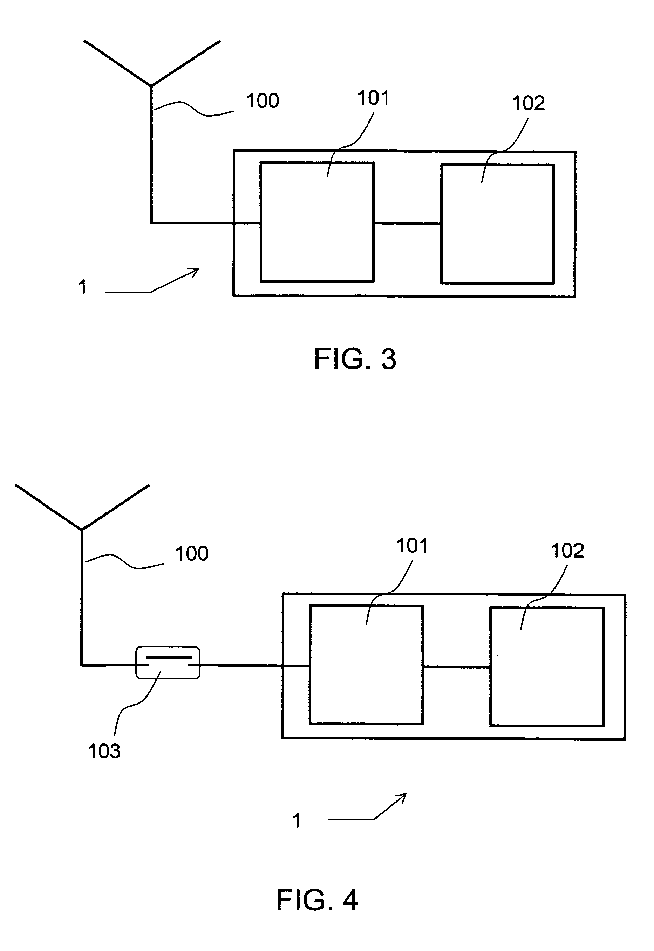

La figure 3 représente un transpondeur 1 selon l'invention. Il est constitué d'une antenne 100 reliée à un dispositif SAW de type dipôle, lui-même constitué par la mise en cascade d'un filtre à bande étroite 101 et d'une ligne à retard 102 à réflexion totale.

Dans le cas où les transpondeurs 1 ne possèdent qu'un filtre unique à bande étroite, il est entièrement défini par sa fonction de transfert en réflexion. Ses caractéristiques essentielles sont :
- la fréquence centrale F qui est le paramètre identifiant du transpondeur.
- la bande passante B qui vaut F/Q, Q étant le coefficient de qualité du résonateur.
- la bande atténuée de largeur 2Δf, Δf étant l'écart minimal permettant de différencier sans ambiguïté deux fréquences F₁ et F₂ correspondant à deux transpondeurs différents.
- le temps de transit τ de la ligne à retard en réflexion.

Avantageusement, le transpondeur peut comporter plusieurs filtres électroniques à bande spectrale étroite, chaque bande spectrale de chaque filtre étant centrée sur une fréquence centrale différente, lesdits filtres électroniques étant associés en parallèle et la ligne à retard étant disposée en série avec l'association desdits filtres. On peut ainsi réaliser des fonctions plus complexes sur un seul transpondeur.

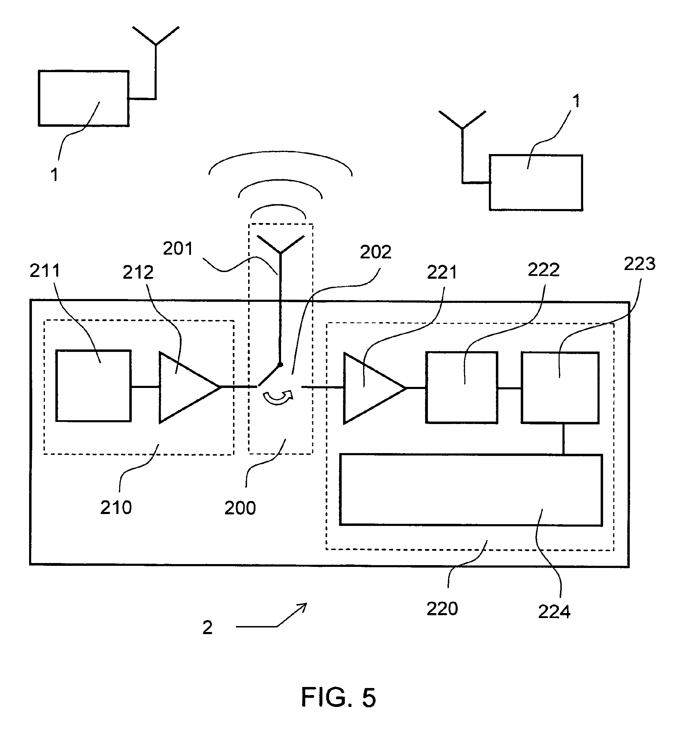

Comme illustré en figure 5, un dispositif électronique d'interrogation à distance comprend au moins :
- un premier ensemble électronique de génération de signaux radiofréquences 210;
- un second ensemble électronique de traitement de signaux radiofréquences 220 ;
- un ensemble d'émission/réception 200 des signaux radiofréquences comprenant une antenne commune 201 dite d'émission/réception et des moyens électroniques de commande 202 ;
- et au moins un transpondeur 1.

Le premier ensemble électronique de génération de signal 210 comprend des moyens électroniques de synthèse de fréquence 211 et des moyens électroniques d'amplification 212.

Les moyens électroniques 211 permettant de générer un signal à une fréquence d'émission variable située dans la bande spectrale du transpondeur. La synthèse de fréquence couvre la bande de fréquence de l'application visée avec un pas aussi fin que la demi-bande passante des transpondeurs SAW. La fréquence est fixe à chaque émission et peut varier d'une émission à la suivante.

Le signal radiofréquence généré peut être modulé en amplitude, la modulation d'amplitude étant à une fréquence d'émission variable située dans la bande spectrale du transpondeur. A titre d'exemple, la mise en forme temporelle du signal d'émission peut être une porteuse modulée en amplitude à 100 % de type « OOK », acronyme anglo-saxon signifiant « OnOff Keying ».

La durée T de l'impulsion émise est suffisamment longue pour permettre à la réponse du filtre du transpondeur SAW d'atteindre son régime stationnaire en fin d'émission. Ainsi, en fin d'interrogation, la réponse du transpondeur équivaut à sa réponse harmonique. Par conséquent, la durée T est sensiblement supérieure au rapport du coefficient de surtension Q du filtre électronique du transpondeur sur sa fréquence centrale F. En pratique, on choisit la durée T telle que T soit supérieure à 3Q/πF. Par exemple, pour une fréquence de 433 mégaHertz, prise dans la bande ISM, acronyme anglo-saxon signifiant « Industrial, Scientific, Medical » et pour un coefficient de surtension Q de 5000, la durée T doit être supérieure à 11 microsecondes.

Le premier ensemble électronique de génération de signaux radiofréquences 210 et le second ensemble électronique de réception de signaux radiofréquences 220 ont une antenne commune 201 dite d'émission/réception et des moyens électroniques de commande 202 permettant de guider le signal du premier ensemble électronique de génération de signaux vers ladite antenne 201 et de guider le signal de réception de ladite antenne vers le second ensemble électronique de réception et de traitement 220. La commande est symbolisée sur la figure 5 par une flèche semi-circulaire.

Le second ensemble électronique de réception de signaux radiofréquences 220 comporte des moyens d'amplification et de détection d'amplitude du signal reçu 221, des moyens d'échantillonnage 222 et des moyens de traitement électroniques 224 permettant de déterminer l'amplitude et la fréquence des signaux reçus. Le second ensemble électronique de réception 220 de signaux radiofréquences peut comporter également au moins un convertisseur analogique/numérique 223 permettant d'assurer le traitement numérique du signal. Dans ce cas, le traitement des données est réalisé de façon numérique.

Ce second ensemble doit être opérationnel dès la fin de la phase d'émission. L'échantillonnage du signal démodulé débute ainsi après la fin de l'émission à un instant compris entre T et T+τ. La démodulation d'amplitude du signal reçu peut être cohérente ou incohérente selon l'application envisagée.

Si un transpondeur unique 1 est dans le champ de l'antenne 201, les signaux obtenus venant du transpondeur sont une mesure relative de l'amplitude de la fonction de transfert du filtre du transpondeur à la fréquence considérée. En faisant varier la fréquence d'interrogation, il est possible de décrire cette fonction de transfert et d'en extraire la fréquence centrale du transpondeur et donc de l'identifier.

Si une pluralité N de transpondeurs différents de fréquence centrale F différente sont dans le champ d'interrogation de l'antenne, les signaux obtenus sont la somme relative des amplitudes des différentes fonctions de transfert des filtres des transpondeurs à la fréquence considérée. En faisant varier la fréquence d'interrogation, il est possible de décrire toutes les fonctions de transfert superposées et d'en extraire les fréquences centrales des transpondeurs détectés et donc de les identifier.

Afin que les N transpondeurs puissent fonctionner ensemble sans se parasiter, les conditions suivantes doivent être réunies :
- la bande de fréquence allouée à l'application est divisée en N sous-bandes disjointes de largeur comparable ; chaque sous-bande étant attribuée à un transpondeur donné ;
- la fréquence centrale du transpondeur doit rester à l'intérieur de cette sous-bande pour que l'identification se fasse sans ambiguïté ;
- la fonction de transfert d'un transpondeur donné doit présenter une atténuation suffisante dans les autres sous-bandes pour la même raison ;
- le retard τ dépend de l'électronique du système d'interrogation, son rôle est de retarder le signal réémis par le transpondeur de façon que le récepteur puisse traiter la fin de celui-ci en dehors de la plage temporelle du signal d'émission et des échos réfléchis par l'environnement du système.

Les signaux transitoires liés à l'extinction du signal d'interrogation au temps T reviennent vers le récepteur après un temps supérieur à T+τ et ne perturbent donc pas la mesure effectuée entre T et T+τ.

A titre d'exemple et avec les mêmes valeurs numériques que précédemment, une sous-bande de 200 kiloHertz suffit par transpondeur et un retard τ de 2 microsecondes est suffisant pour séparer le signal émis du signal reçu.

L'ensemble du dispositif fait appel à des constituants électroniques standards tant à l'émission qu'à la réception.

Comme on l'a vu, la fonction de base du système d'interrogation est de mesurer la fréquence centrale des transpondeurs. Pour la fonction identification, une mesure à basse résolution suffit pour discriminer les N sous-bandes de fréquence possibles des N transpondeurs. Le système peut également comprendre des moyens d'analyse aptes à une mesure à haute résolution avec un pas d'analyse de fréquence plus fin et/ou une interpolation entre mesures obtenues avec un pas d'analyse plus grossier. Cette mesure fine permet d'utiliser le transpondeur SAW comme transducteur d'une grandeur qui affecte directement sa fréquence centrale comme, par exemple, la température, la pression ou la contrainte.

La fonction transducteur ou capteur est donc une fonctionnalité inhérente au système selon l'invention. Sa mise en oeuvre ne demande que des ajouts logiciels au niveau des séquences d'interrogation et d'extraction de l'information numérique issue des moyens de traitement.

Bien entendu, il est possible que le dispositif comporte plusieurs filtres électroniques à bande spectrale étroite, chaque bande spectrale de chaque filtre étant centrée sur une fréquence centrale différente, lesdits filtres électroniques étant associés en parallèle et la ligne à retard étant disposée en série avec l'association desdits filtres. Par exemple, le transpondeur peut comporter au moins trois filtres, le premier destiné à la mesure de la pression et le second et le troisième destinés à la mesure de température.

En adjoignant au transpondeur SAW passif des systèmes de modulation externes commandés par des capteurs de grandeurs physiques, il est possible de le transformer en capteur extrinsèque et ainsi d'augmenter les fonctionnalités du système d'interrogation.

La figure 4 illustre ce principe. Un interrupteur radiofréquence 103 est incorporé entre l'antenne et le dispositif SAW. Il est alors possible de moduler par tout ou rien l'amplitude du signal reçu et réémis par le transpondeur. Le système d'interrogation, après une séquence d'identification où l'interrupteur est nécessairement passant, peut interpréter toute variation ultérieure du niveau reçu comme une information transmise par le transpondeur sur un état donné de celui-ci. Le caractère passif du transpondeur est conservé si l'interrupteur est lui aussi passif. L'interrupteur est, par exemple, un bouton poussoir, un système micro-mécanique, un relais de type relais Reed. Il est alors actionné par une source d'énergie non électrique pour son changement d'état qui peut être obtenu par un déplacement mécanique, un rapprochement d'une source magnétique ou une variation de pression ou de température.

Un interrupteur électronique actif peut également être utilisé si une source d'énergie électrique est disponible au niveau du transpondeur comme une pile ou une télé-alimentation.

Les dispositifs selon l'invention permettent également de réaliser une fonctionnalité supplémentaire : la localisation des transpondeurs SAW passifs lorsque ceux-ci sont censés se trouver dans des emplacements pré-determinés mais rangés de façon aléatoire vis-à-vis de l'identifiant. Par exemple, dans un véhicule automobile, on peut ainsi retrouver la position d'un siège donné ou d'une roue donnée après une opération de démontage-remontage.

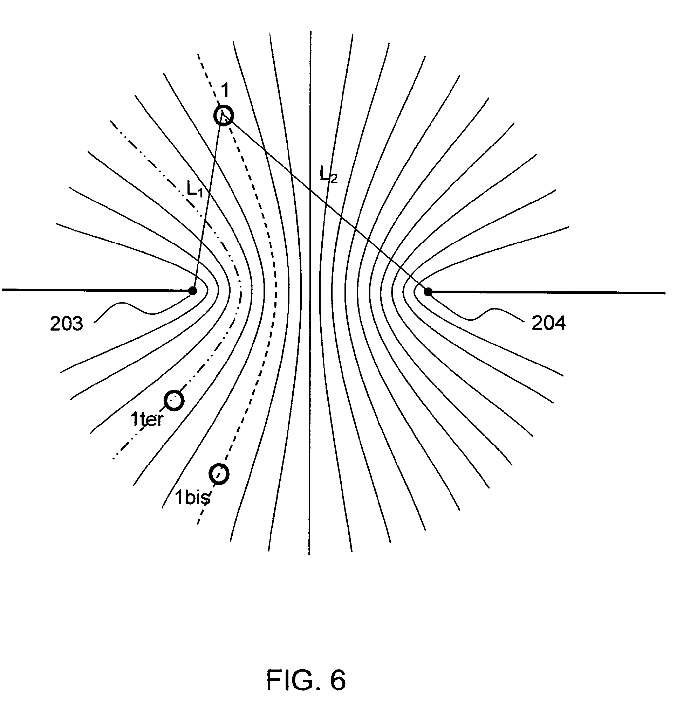

Le principe de la localisation est indiqué sur la figure 6. Il est basé sur la mesure de l'écart de trajets directs L₁ et L₂ entre un transpondeur 1 et deux antennes de réception 203 et 204. Si les antennes sont séparées d'une distance a, l'écart varie entre 0 et a et les points de même écart ou d'iso-écart décrivent des familles d'hyperboloïdes dont les foyers sont les antennes. Sur la figure 6, ces familles d'hyperboloïdes sont représentées dans un plan de coupe passant par les deux antennes 203 et 204 et sont, dans ce cas, des hyperboles.

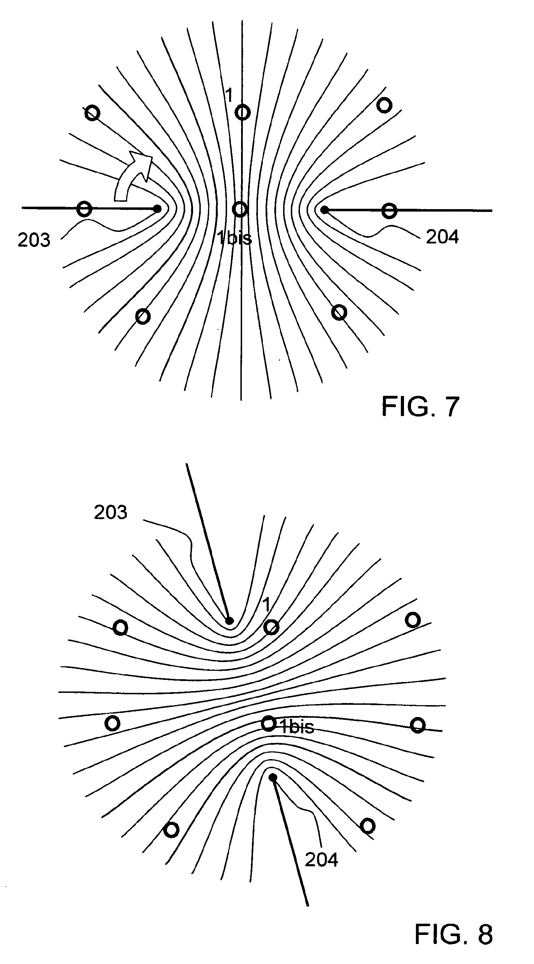

Pour que le système fonctionne correctement, il faut qu'un écart de trajet mesuré ne soit imputable qu'à un seul emplacement prédéterminé pour un transpondeur. Par exemple, sur la figure 6, les transpondeurs 1 et 1 bis sont sur le même arc d'hyperbole représenté par une ligne en pointillés et par conséquent, il est impossible de les discriminer par une mesure de la variation de trajet. A contrario, les transpondeurs 1 et 1ter sont situés sur deux arcs d'hyperbole différents représentés par deux lignes en pointillés différents et par conséquent, il est possible de les discriminer par une mesure de la variation de trajet. Dans le cas où le nombre de transpondeurs est faible, il est toujours possible de trouver un positionnement adéquat des deux antennes de réception par rapport aux emplacements des transpondeurs comme indiqué sur les figures 7 et 8. Sur ces figures, 8 transpondeurs sont situés dans un même plan. Sur la figure 7, les transpondeurs 1 et 1 bis ne peuvent être discriminés car situés sur le même arc d'hyperbole. Un changement d'orientation des antennes 203 et 204 indiqué par une flèche semi-circulaire sur la figure 7 permet alors de discriminer tous les transpondeurs comme indiqué sur la figure 8.

Fonctionnellement, la mesure de l'écart de trajet électrique se fait par la mesure du retard différentiel entre les deux signaux issus d'un même transpondeur et captés par chacune des deux antennes de réception. En utilisant le même signal d'interrogation que pour l'identification du transpondeur et en mesurant de façon identique les échantillons entre T et T+τ, la mesure du retard différentiel se ramène à la mesure de la phase différentielle entre les deux signaux, ces échantillons étant représentatifs de la réponse harmonique du transpondeur. Cette mesure peut être effectuée par la mesure du sinus représentatif du déphasage entre les deux signaux. Pour ôter toute ambiguïté sur la détermination de l'écart de trajet électrique par la mesure d'une phase, connue nécessairement à un déphasage de π prés, l'écart de trajet doit être inférieur à une demi-longueur d'onde du signal d'interrogation. Cette condition est remplie si l'écart entre les antennes de réception est inférieur à cette valeur. Par exemple, à la fréquence de 433 mégaHertz, la distance séparant les antennes doit rester inférieure à 0,35 mètre.

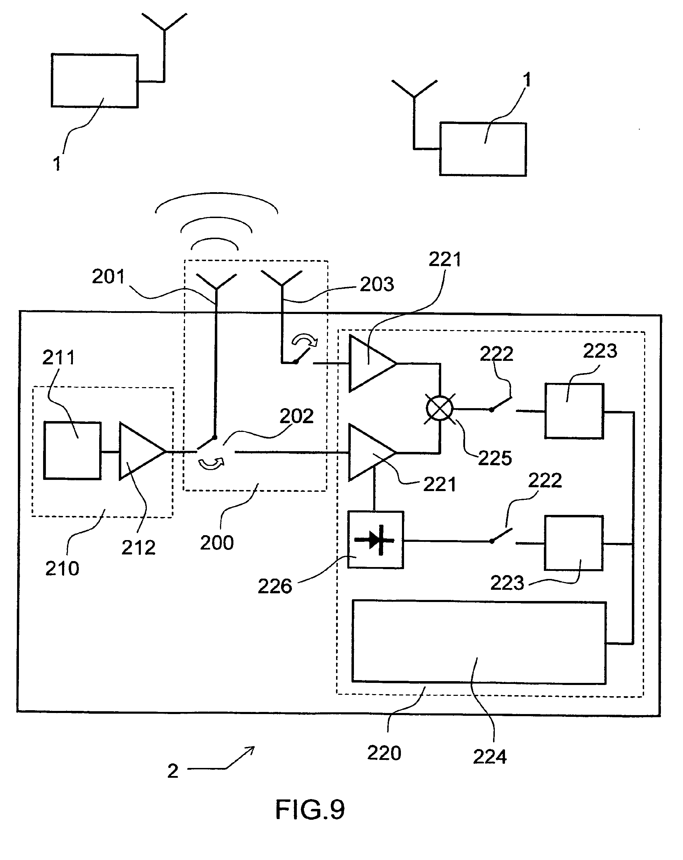

Pour assurer la fonction localisation, le système d'interrogation comprenant un premier ensemble électronique de génération de signaux radiofréquences 210 et un second ensemble électronique de traitement de signaux radiofréquences 220 nécessite une voie de réception supplémentaire comme indiqué sur la figure 9, le premier ensemble électronique de génération de signaux radiofréquence 210 comprenant les moyens électroniques de synthèse de fréquence 211 et les moyens électroniques d'amplification 212 étant conservé.

Cette voie de réception comporte une antenne séparée 203 et les moyens électroniques nécessaire pour mesurer la phase différentielle entre l'écho reçu par cette seconde antenne 203 et l'écho reçu par la première antenne 201. Pour la mesure de la phase différentielle, différentes architectures électroniques sont possibles. A titre d'exemple, la figure 9 montre un exemple d'architecture électronique. Elle comprend :
- des moyens 221 et 226 permettant la détection d'amplitude de l'écho reçu par l'antenne 201. On assure ainsi l'identification du signal ;
- lesdits moyens 221 permettant la limitation d'amplitude et la démodulation directe de phase des deux échos reçus par les deux antennes 201 et 203 ;
- des moyens de mélange 225 des signaux radiofréquences ainsi limités par les dispositifs 221;
- deux échantillonneurs-bloqueurs 222 réalisant l'échantillonnage à la sortie du démodulateur de phase 225 et du détecteur d'amplitude 226. L'échantillonnage est effectué entre les instants T et T + τ ;
- des moyens de conversion analogiques-numériques 223 permettant la conversion des signaux analogiques en signaux numériques ;
- des moyens de traitement numériques 224 réalisant le traitement numérique du signal.

Il est également possible de réaliser par une électronique appropriée la démodulation en phase et en quadrature des signaux reçus, l'échantillonnage desdits signaux entre T et T + τ, leur conversion en signaux numériques et la mesure d'amplitude et de phase sur les échantillons numérisés en réalisant une conversion de coordonnées cartésiennes en coordonnées polaires.

Le procédé de mise en place d'un dispositif électronique d'interrogation à distance de ce type comportant au moins deux transpondeurs, comporte les étapes préliminaires d'installation suivantes :
- Détermination des emplacements possibles des transpondeurs ;
- Tracé des courbes à déphasage constant entre les deux antennes ;
- Optimisation de l'emplacement et de l'orientation des antennes de façon qu'il existe un déphasage différent entre les signaux reçus d'un premier transpondeur et d'un quelconque second transpondeur ;
- Mémorisation desdits déphasages dans des mémoires électroniques associées aux moyens de traitement électroniques 224.

En situation opérationnelle, le système d'interrogation compare la phase mesurée avec les valeurs de phase mémorisées pour décider de la localisation d'un transpondeur identifié.

Une bande de fréquences privilégiée pour ce type de systèmes est la bande ISM, acronyme anglo-saxon signifiant « Industrial, Scientific, Medical » ayant pour fréquence centrale une fréquence de 433 mégaHertz et une largeur de bande de 1,7 mégaHertz.

Un domaine d'application important est l'identification et la localisation par un système sans fil des sièges à l'intérieur d'un véhicule comportant de 1 à 8 sièges selon la configuration du véhicule, les sièges des rangs arrière étant banalisés et interchangeables. L'interrogation des transpondeurs est effectuée dans la bande ISM. A titre d'exemples, les transpondeurs fournissent des informations sur la présence ou non d'un siège, principalement à l'arrière du véhicule, la localisation des sièges présents, l'occupation ou non d'un siège, la fermeture ou non d'une ceinture de sécurité ou la température du siège.

## Revendications

1. Transpondeur électronique (1) comprenant au moins une antenne de réception et d'émission (100) de signaux radiofréquences, au moins un dispositif à ondes acoustiques de surface, et du moins un filtre électronique (101) à bande spectrale étroite centrée sur une fréquence centrale, **caractérisé en ce que** ledit dispositif comporte une ligne à retard (102) fonctionnant en réflexion, le filtre électronique et la ligne à retard étant disposés en série.

2. Transpondeur électronique (1) selon la revendication 1, **caractérisé en ce que** le dispositif comporte plusieurs filtres électroniques (101) à bande spectrale étroite, chaque bande spectrale de chaque filtre étant centrée sur une fréquence centrale différente, lesdits filtres électroniques étant associés en parallèle et la ligne à retard étant disposée en série avec l'association desdits filtres.

3. Transpondeur électronique selon les revendications 1 ou 2, **caractérisé en ce que** le transpondeur comprend des moyens de transduction d'au moins une grandeur physique en variation d'au moins une fréquence centrale.

4. Transpondeur électronique selon la revendication 3, **caractérisé en ce** le transpondeur comporte au moins trois filtres, le premier destiné à la mesure de la pression et le second et le troisième destinés à la mesure de température.

5. Transpondeur électronique selon l'une des revendications précédentes, **caractérisé en ce que** le transpondeur comprend des moyens de modulation (103) du signal radiofréquence reçu.

6. Transpondeur électronique selon la revendication 5, **caractérisé en ce que** les moyens de modulation sont un interrupteur tout ou rien.

7. Dispositif électronique d'interrogation à distance (1, 2) comprenant au moins un premier ensemble électronique (210) de génération de signaux radiofréquences, un second ensemble électronique (220) de traitement de signaux radiofréquences et au moins un transpondeur (1), **caractérisé en ce que** ledit transpondeur est selon l'une des revendications précédentes.

8. Dispositif électronique d'interrogation à distance selon la revendication 7, **caractérisé en ce que** le premier ensemble électronique (210) de génération de signal comprend au moins des moyens électroniques de synthèse de fréquence (211) permettant de générer un signal à une fréquence d'émission variable située dans la bande spectrale du transpondeur.

9. Dispositif électronique d'interrogation à distance selon la revendication 8, **caractérisé en ce que** le premier ensemble électronique (210) de génération de signaux comprend également des moyens électroniques (212) permettant d'émettre un signal radiofréquence modulé en amplitude, la modulation d'amplitude étant à une fréquence d'émission variable située dans la bande spectrale du transpondeur.

10. Dispositif électronique d'interrogation à distance selon la revendication 9, **caractérisé en ce que** la durée (T) du signal d'émission est sensiblement supérieure au rapport du coefficient de surtension (Q) du filtre électronique du transpondeur sur sa fréquence centrale (F).

11. Dispositif électronique d'interrogation à distance selon l'une des revendications 7 à 10, **caractérisé en ce que** le premier ensemble électronique de génération de signaux radiofréquences (210) et le second ensemble électronique (220) de traitement de signaux radiofréquences ont une antenne commune (201) dite d'émission/réception et des moyens électroniques (202) de commande permettant de guider le signal d'émission du premier ensemble électronique de génération vers ladite antenne et de guider le signal de réception de ladite antenne vers le second ensemble électronique de traitement.

12. Dispositif électronique d'interrogation à distance selon l'une des revendications 7 à 11, **caractérisé en ce que** le second ensemble électronique (220) de traitement de signaux radiofréquences comporte des moyens de démodulation d'amplitude(221), des moyens d'échantillonnage (222) et des moyens de traitement électroniques (224) permettant au moins de déterminer l'amplitude et la fréquence des signaux reçus.

13. Dispositif électronique d'interrogation à distance selon la revendication 12, **caractérisé en ce que** le second ensemble électronique (220) de traitement de signaux radiofréquences comporte également au moins un convertisseur analogique/numérique (223) permettant d'assurer le traitement numérique du signal.

14. Dispositif électronique d'interrogation à distance selon l'une des revendications 7 à 13, **caractérisé en ce que,** lorsque un signal est émis par le premier ensemble électronique, l'échantillonnage des signaux reçus débute à un instant compris entre la fin de l'émission du signal émis et la fin de l'émission dudit signal émis augmentée du retard temporel de la ligne à retard du transpondeur.

15. Dispositif électronique d'interrogation à distance selon l'une des revendication 7 à 14, **caractérisé en ce que** le second ensemble électronique (220) de traitement de signaux radiofréquences comprend une seconde antenne de réception (203) distante de la première antenne (201) et des moyens de comparaison électronique (225) des phases des signaux radiofréquence reçus par la première et la seconde antenne (201, 203).

16. Dispositif électronique d'interrogation à distance selon la revendication 15, **caractérisé en ce que** la distance (a) séparant la première antenne (201) de la seconde antenne (203) est inférieure ou égale à la moitié de la longueur d'onde correspondant à la fréquence centrale (F) du transpondeur.

17. Procédé de mise en place d'un dispositif électronique d'interrogation à distance selon les revendications 15 ou 16, comportant au moins deux transpondeurs (1, 1 bis, 1ter), **caractérisé en ce qu'**il comporte les étapes préliminaires d'installation suivantes :
• Détermination des emplacements possibles des transpondeurs ;
• Tracé des courbes à déphasage constant entre les deux antennes ;
• Optimisation de l'emplacement et de l'orientation des antennes de façon qu'il existe un déphasage différent entre les signaux reçus d'un premier transpondeur et d'un quelconque second transpondeur ;
• Mémorisation desdits déphasages dans des mémoires électroniques associées aux moyens de traitement électroniques.

18. Dispositif d'interrogation à distance selon l'une des revendications 7 à 16, **caractérisé en ce qu'**il émet et reçoit des signaux radiofréquences dans la bande ISM à 433 mégaHertz.

19. Véhicule **caractérisé en ce qu'**il comporte au moins un dispositif électronique d'interrogation à distance selon l'une des revendications 7 à 16 ou 18.

## Claims

1. Electronic transponder (1) comprising at least one antenna (100) for receiving and transmitting radiofrequency signals, at least one surface acoustic wave device and at least one electronic filter (101) with narrow spectral band centered on a central frequency, **characterized in that** said device comprises a delay line (102) operating in reflection mode, the electronic filter and the delay line being arranged in series.

2. Electronic transponder (1) according to Claim 1, **characterized in that** the device comprises a number of electronic filters (101) with narrow spectral band, each spectral band of each filter being centered on a different central frequency, said electronic filters being associated in parallel and the delay line being arranged in series with the association of said filters.

3. Electronic transponder according to Claim 1 or 2, **characterized in that** the transponder comprises means of transducing at least one physical quantity by varying at least one central frequency.

4. Electronic transponder according to Claim 3, **characterized in that** the transponder comprises at least three filters, the first intended to measure pressure and the second and third intended to measure temperature.

5. Electronic transponder according to one of the preceding claims, **characterized in that** the transponder comprises means (103) of modulating the received radiofrequency signal.

6. Electronic transponder according to Claim 5, **characterized in that** the modulation means are an on/off switch.

7. Electronic remote interrogation device (1, 2) comprising at least one first electronic assembly (210) for generating radiofrequency signals, a second electronic assembly (220) for processing radiofrequency signals and at least one transponder (1), **characterized in that** said transponder is according to one of the preceding claims.

8. Electronic remote interrogation device according to Claim 7, **characterized in that** the first electronic assembly (210) for generating signals comprises at least electronic frequency synthesis means (211) making it possible to generate a signal at a variable transmission frequency located in the spectral band of the transponder.

9. Electronic remote interrogation device according to Claim 8, **characterized in that** the first electronic assembly (210) for generating signals also comprises electronic means (212) making it possible to transmit an amplitude-modulated radiofrequency signal, the amplitude modulation being at a variable transmission frequency located in the spectral band of the transponder.

10. Electronic remote interrogation device according to Claim 9, **characterized in that** the duration (T) of the transmission signal is substantially greater than the ratio of the overvoltage coefficient (Q) of the electronic filter of the transponder to its central frequency (F).

11. Electronic remote interrogation device according to one of Claims 7 to 10, **characterized in that** the first electronic assembly for generating radiofrequency signals (210) and the second electronic assembly (220) for processing radiofrequency signals have a common antenna, called transmit/receive antenna (201) and electronic control means (202) making it possible to guide the transmission signal from the first electronic generation assembly to said antenna and to guide the reception signal from said antenna to the second electronic processing assembly.

12. Electronic remote interrogation device according to one of Claims 7 to 11, **characterized in that** the second electronic assembly (220) for processing radiofrequency signals comprises amplitude demodulation means (221), sampling means (222) and electronic processing means (224) making it possible at least to determine the amplitude and the frequency of the received signals.

13. Electronic remote interrogation device according to Claim 12, **characterized in that** the second electronic assembly (220) for processing radiofrequency signals also comprises at least one analog/digital converter (223) for digitally processing the signal.

14. Electronic remote interrogation device according to one of Claims 7 to 13, **characterized in that**, when a signal is transmitted by the first electronic assembly, the sampling of the received signals begins at an instant between the end of the transmission of the transmitted signal and the end of the transmission of said transmitted signal plus the time delay of the delay line of the transponder.

15. Electronic remote interrogation device according to one of Claims 7 to 14, **characterized in that** the second electronic assembly (220) for processing radiofrequency signals comprises a second receive antenna (203) remote from the first antenna (201) and electronic means (225) of comparing the phases of the radiofrequency signals received by the first and second antennas (201, 203).

16. Electronic remote interrogation device according to Claim 15, **characterized in that** the distance (a) separating the first antenna (201) from the second antenna (203) is less than or equal to half the wavelength corresponding to the central frequency (F) of the transponder.

17. Method of installing an electronic remote interrogation device according to Claim 15 or 16, comprising at least two transponders (1, 1a, 1b), **characterized in that** it comprises the following preliminary installation steps:
• Determination of the possible locations of the transponders;
• Plotting of the constant phase-shift curves between the two antennas;
• Optimization of the location and the orientation of the antennas so that there is a different phase shift between the signals received from a first transponder and from any second transponder;
• Storage of said phase shifts in electronic memories associated with the electronic processing means.

18. Remote interrogation device according to one of Claims 7 to 16, **characterized in that** it transmits and receives radiofrequency signals in the 433 megahertz ISM band.

19. Vehicle, **characterized in that** it comprises at least one electronic remote interrogation device according to one of Claims 7 to 16 or 18.

## Patentansprüche

1. Elektronischer Transponder (1), der mindestens eine Empfangs- und Sendeantenne (100) von Radiofrequenzsignalen, mindestens eine Oberflächenschallwellen-Vorrichtung und mindestens ein elektronisches Filter (101) mit auf eine Mittenfrequenz zentriertem schmalem Spektralband aufweist, **dadurch gekennzeichnet, dass** die Vorrichtung eine in Reflexion betriebene Verzögerungsleitung (102) aufweist, wobei das elektronische Filter und die Verzögerungsleitung in Reihe angeordnet sind.

2. Elektronischer Transponder (1) nach Anspruch 1, **dadurch gekennzeichnet, dass** die Vorrichtung mehrere elektronische Filter (101) mit schmalem Spektralband aufweist, wobei jedes Spektralband jedes Filters auf eine andere Mittenfrequenz zentriert ist, wobei die elektronischen Filter parallel verbunden sind und die Verzögerungsleitung in Reihe mit dem Verbund der Filter angeordnet ist.

3. Elektronischer Transponder nach einem der Ansprüche 1 oder 2, **dadurch gekennzeichnet, dass** der Transponder Einrichtungen zur Transduktion mindestens einer physikalischen Größe in Variation mindestens einer Mittenfrequenz aufweist.

4. Elektronischer Transponder nach Anspruch 3, **dadurch gekennzeichnet, dass** der Transponder mindestens drei Filter aufweist, von denen das erste zur Messung des Drucks und das zweite und das dritte zur Messung der Temperatur bestimmt sind.

5. Elektronischer Transponder nach einem der vorhergehenden Ansprüche, **dadurch gekennzeichnet, dass** der Transponder Einrichtungen (103) zur Modulation des empfangenen Radiofrequenzsignals aufweist.

6. Elektronischer Transponder nach Anspruch 5, **dadurch gekennzeichnet, dass** die Modulationseinrichtungen ein Ein/Aus-Schalter sind.

7. Elektronische Fernabfragevorrichtung (1, 2), die mindestens eine erste elektronische Einheit (210) zur Erzeugung von Radiofrequenzsignalen, eine zweite elektronische Einheit (220) zur Verarbeitung von Radiofrequenzsignalen und mindestens einen Transponder (1) aufweist, **dadurch gekennzeichnet, dass** der Transponder gemäß einem der vorhergehenden Ansprüche ist.

8. Elektronische Fernabfragevorrichtung nach Anspruch 7, **dadurch gekennzeichnet, dass** die erste elektronische Signalerzeugungseinheit (210) mindestens elektronische Frequenzsyntheseeinrichtungen (211) aufweist, die es ermöglichen, ein Signal mit einer variablen Sendefrequenz zu erzeugen, die sich im Spektralband des Transponders befindet.

9. Elektronische Fernabfragevorrichtung nach Anspruch 8, **dadurch gekennzeichnet, dass** die erste elektronische Signalerzeugungseinheit (210) ebenfalls elektronische Einrichtungen (212) aufweist, die es ermöglichen, ein amplitudenmoduliertes Radiofrequenzsignal zu senden, wobei die Amplitudenmodulation eine variablen Sendefrequenz hat, die sich im Spektralband des Transponders befindet.

10. Elektronische Fernabfragevorrichtung nach Anspruch 9, **dadurch gekennzeichnet, dass** die Dauer (T) des Sendesignals deutlich über dem Verhältnis des Überspannungskoeffizienten (Q) des elektronischen Filters des Transponders zu seiner Mittenfrequenz (F) liegt.

11. Elektronische Fernabfragevorrichtung nach einem der Ansprüche 7 bis 10, **dadurch gekennzeichnet, dass** die erste elektronische Einheit zur Erzeugung von Radiofrequenzsignalen (210) und die zweite elektronische Einheit zur Verarbeitung von Radiofrequenzsignalen (220) eine gemeinsame Sende-/Empfangsantenne (201) und elektronische Steuereinrichtungen (202) haben, die es ermöglichen, das Sendesignal der ersten elektronischen Erzeugungseinheit zur Antenne zu leiten und das Empfangssignal der Antenne zur zweiten elektronischen Verarbeitungseinheit zu leiten.

12. Elektronische Fernabfragevorrichtung nach einem der Ansprüche 7 bis 11, **dadurch gekennzeichnet, dass** die zweite elektronische Verarbeitungseinheit (220) von Radiofrequenzsignalen Einrichtungen zur Amplitudendemodulation (221), Abtasteinrichtungen (222) und elektronische Verarbeitungseinrichtungen (224) aufweist, die es zumindest ermöglichen, die Amplitude und die Frequenz der empfangenen Signale zu bestimmen.

13. Elektronische Fernabfragevorrichtung nach Anspruch 12, **dadurch gekennzeichnet, dass** die zweite elektronische Verarbeitungseinheit (220) von Radiofrequenzsignalen ebenfalls mindestens einen Analog/Digital-Wandler (223) aufweist, der es ermöglicht, die digitale Verarbeitung des Signals zu gewährleisten.

14. Elektronische Fernabfragevorrichtung nach einem der Ansprüche 7 bis 13, **dadurch gekennzeichnet, dass,** wenn ein Signal von der ersten elektronischen Einheit gesendet wird, die Abtastung der empfangenen Signale in einem Zeitpunkt beginnt, der zwischen dem Ende des Sendens des gesendeten Signals und dem Ende des Sendens des gesendeten Signals erhöht um die zeitliche Verzögerung der Verzögerungsleitung des Transponders liegt.

15. Elektronische Fernabfragevorrichtung nach einem der Ansprüche 7 bis 14, **dadurch gekennzeichnet, dass** die zweite elektronische Verarbeitungseinheit (220) von Radiofrequenzsignalen eine zweite Empfangsantenne (203) entfernt von der ersten Antenne (201) und Einrichtungen zum elektronischen Vergleich (225) der Phasen der von der ersten und der zweiten Antenne (201, 203) empfangenen Radiofrequenzsignale aufweist.

16. Elektronische Fernabfragevorrichtung nach Anspruch 15, **dadurch gekennzeichnet, dass** die die erste Antenne (201) von der zweiten Antenne (203) trennende Entfernung (a) geringer als die oder gleich der Hälfte der Wellenlänge entsprechend der Mittenfrequenz (F) des Transponders ist.

17. Verfahren zum Einsetzen einer elektronische Fernabfragevorrichtung nach einem der Ansprüche 15 oder 16, die mindestens zwei Transponder (1, 1bis, 1ter) aufweist, **dadurch gekennzeichnet, dass** es die folgenden vorhergehenden Installierungsschritte aufweist:
• Bestimmung der möglichen Standorte der Transponder;
• Verlauf der Kurven mit konstanter Phasenverschiebung zwischen den zwei Antennen;
• Optimierung des Standorts und der Ausrichtung der Antenne derart, dass es eine unterschiedliche Phasenverschiebung zwischen den von einem ersten Transponder und einem beliebigen zweiten Transponder empfangenen Signalen gibt;
• Speicherung der Phasenverschiebungen in elektronischen Speichern, die den elektronischen Verarbeitungsmitteln zugeordnet sind.

18. Elektronische Fernabfragevorrichtung nach einem der Ansprüche 7 bis 16, **dadurch gekennzeichnet, dass** sie Radiofrequenzsignale im ISM-Band mit 433 Megahertz sendet und empfängt.

19. Fahrzeug, **dadurch gekennzeichnet, dass** es mindestens eine elektronische Fernabfragevorrichtung nach einem der Ansprüche 7 bis 16 oder 18 aufweist.
